# FASCICULE DE BREVET EUROPEEN

(11) **EP 1 626 018 B1**
(45) Date de publication et mention de la délivrance du brevet: **02.04.2008**
(21) Numéro de dépôt: 05354028.2
(22) Date de dépôt: 02.08.2005
(51) Int. Cl.: B65G 65/44

(54) **Dispositif de transfert et de dosage de matière pulvérulente ou granuleuse contenue dans une trémie**
Vorrichtung zur Übergabe und Dosierung von pulvrigen oder körnigen Dosiergut in einem Trichter
Device for feeding and metering of powderized or granulated goods contained in a hopper

(30) Priorité: 10.08.2004 FR 0408798
(43) Date de publication de la demande: 15.02.2006
(73) Titulaire: Movidis, 74960 Meythet (FR)
(72) Inventeur: Mosca, Pierre, 73100 Aix Les Bains (FR)
(74) Mandataire: Hecké, Gérard

(56) Documents cités:
- EP-A- 0 933 313
- DE-A1- 4 407 071
- FR-A- 1 113 864
- US-A- 522 779
- US-A- 4 762 252
- US-A1- 2004 060 802

## Description

### Domaine technique de l'invention

L'invention est relative à un dispositif de transfert et de dosage d'une matière pulvérulente ou granuleuse au moyen d'un organe transporteur lié mécaniquement à des moyens d'entraînement, tel que décrit dans le préambule de la revendication 1.

### Etat de la technique

Les opérations d'extraction et de dosage d'une matière pulvérulente peuvent être effectuées soit par un dispositif à vis sans fin, soit par des systèmes vibrants du type à bielle manivelle. Les vibrations mécaniques des systèmes vibrants appliquent sur les produits pulvérulents un mouvement sinusoïdal, dont la tangente à l'origine comporte une composante verticale et une composante horizontale dans le sens du transfert. La structure de ces dispositifs connus est compliquée, et ne permet pas de réaliser facilement les mesures de pesée et de débit massique de la matière extraite.

Le document US 522779 se rapporte à une machine d'alimentation en minerai, comportant une trémie fixe par rapport à la cuvette de réception, laquelle est animée d'un mouvement rectiligne altematif symétrique engendré par un mécanisme à bielle manivelle.

### Objet de l'invention

L'objet de l'invention consiste à réaliser un dispositif de transfert et de dosage d'une matière pulvérulente, permettant une mesure de variation de masse, et une régulation de débit massique en fonctionnement continu ou discontinu selon la revendication 1.

Le dispositif selon l'invention est caractérisé en ce qu'il comporte :

Selon une caractéristique de l'invention, la course horizontale du mouvement de va-et-vient du mécanisme est réglable entre 0,5 mm et 20 mm, la fréquence d'oscillation étant comprise entre 5 Hz et 100 Hz. II est ainsi possible de doser avec précision une quantité donnée de matière pulvérulente en jouant sur différents paramètres, notamment la fréquence d'oscillation, la section de l'orifice de sortie de la trémie, et également l'inclinaison du système par rapport à un plan horizontal. L'orifice de sortie de la trémie est équipé à cet effet d'un organe d'obturation réglable pour contrôler le débit de la masse extraite.

Selon mode de réalisation préférentiel de l'invention, la lame souple est formée par un feuillard en acier fixé par des vis au mécanisme et à la trémie. La cellule de pesage comprend un capteur de masse fixé sur un intercalaire posé sur le support fixe, et surmonté d'une table fixe sur laquelle glisse la base de la trémie avec interposition d'une pièce de glissement. La lame est dotée d'une rigidité dans le sens du mouvement, et est souple dans le sens gravitationnel, de manière à autoriser la mesure de la masse totale de la trémie et de son contenu en matière pulvérulente.

Selon une autre caractéristique de l'invention, la trémie est alimentée par un tube vertical de stockage de la matière pulvérulente, ledit tube se vidant progressivement par gravité dans la trémie en compensant le débit massique extrait à travers l'orifice. La distance entre le fond de la trémie et la base inférieure du tube est ajustable au moyen de vis de réglage pour adapter le débit de vidange du tube aux caractéristiques d'écoulement de la matière pulvérulente.

Selon une variante, le mécanisme est situé sous une goulotte longitudinale de transfert raccordée à l'orifice de sortie, la trémie et la goulotte étant entraînées par le mécanisme oscillant.

Selon une autre variante, la trémie est fixe, et la lame mobile s'étend le long du fond de la trémie.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue schématique en perspective du dispositif de transfert et de dosage d'une matière pulvérulente selon l'invention ;
- la figure 2 montre une vue en élévation du dispositif de la figure 2 ;
- la figure 3 représente une vue de détail de la goulotte positionnée sur le mécanisme vibrant, et en regard de l'orifice de sortie de la trémie ;
- la figure 4 illustre des diagrammes du débit massique extrait en fonction de la fréquence d'oscillation du mécanisme ;
- la figure 5 est une vue partielle de la figure 1, montrant la lame souple après enlèvement de la goulotte, et de l'ensemble trémie et tube de stockage ;
- les figures 6 et 8 montrent des vues schématiques en perspective d'une variante de réalisation ;
- la figure 7 est une vue en élévation du dispositif de la figure 6 ;
- la figure 9 représente une vue en plan de la figure 8 ;
- la figure 10 montre une vue schématique en perspective d'une autre variante de réalisation.

### Description d'un mode de réalisation préférentiel.

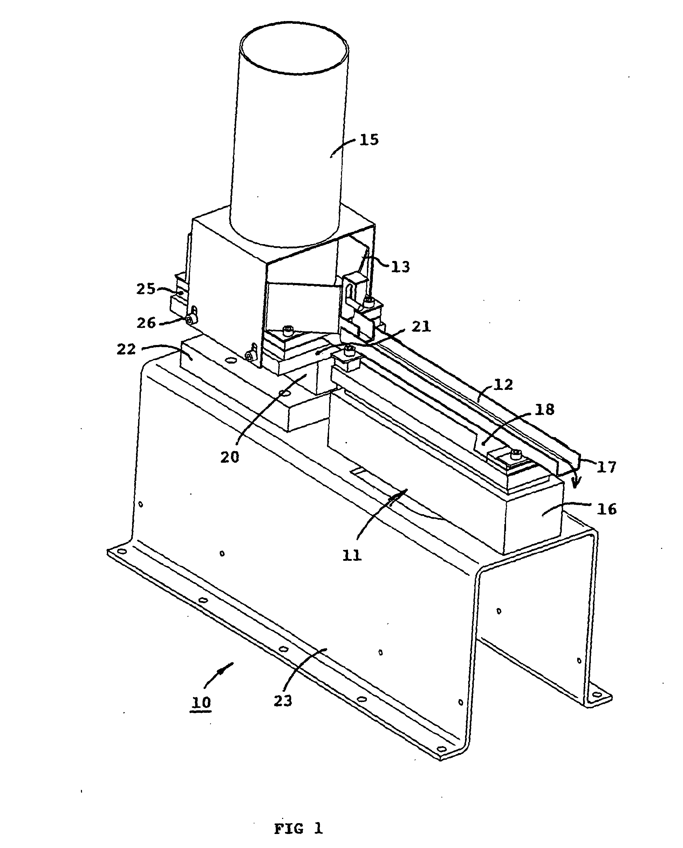

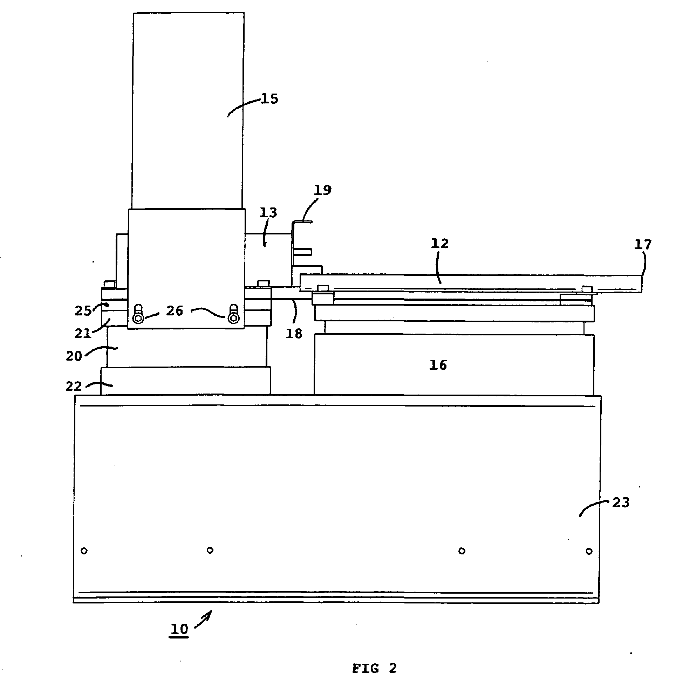

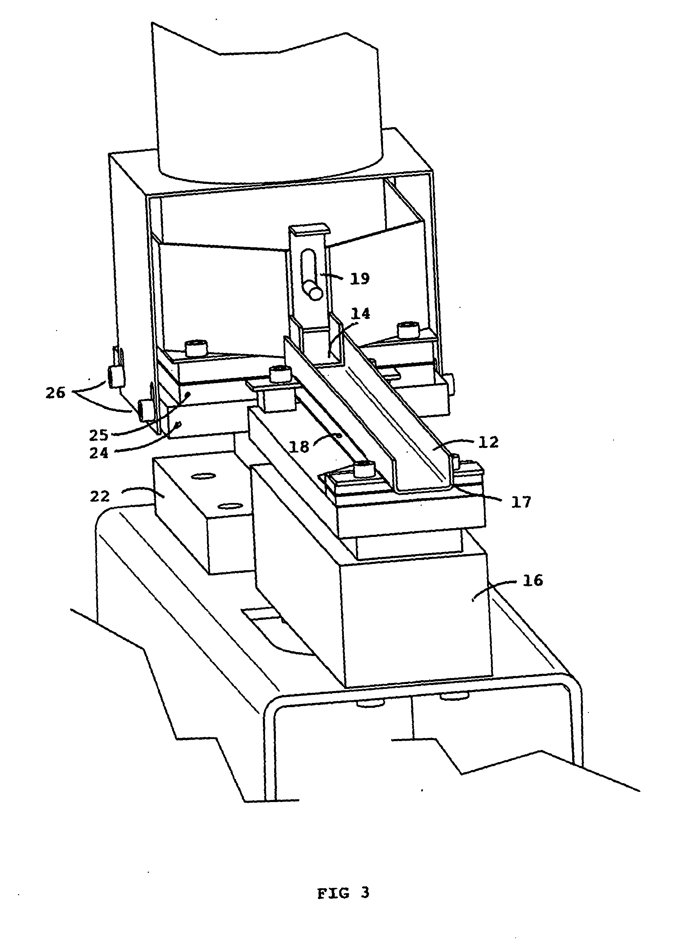

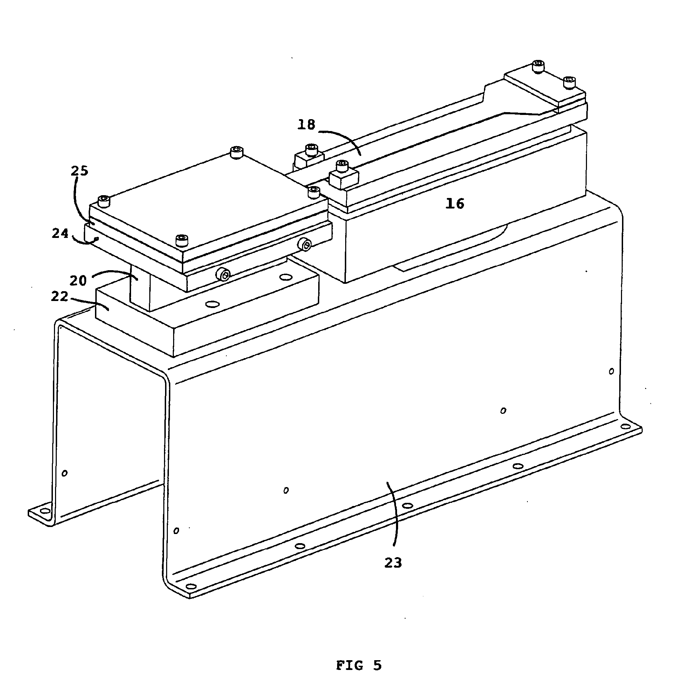

En référence aux figures 1 à 5, un dispositif de dosage 10 de matière pulvérulente ou granuleuse, comporte des moyens d'entraînement 11 destinés à produire un mouvement altematif de transfert, une goulotte 12 de guidage et de transfert constituant l'organe transporteur de la matière pulvérulente ou granuleuse, une trémie 13 de stockage munie d'un orifice de sortie 14, et un tube 15 vertical d'accumulation de ladite matière pulvérulente placé au-dessus de la trémie 13.

Les moyens d'entraînement 11 comportent un mécanisme oscillant 16 animé d'un mouvement de va et vient rectiligne et dissymétrique avec une course horizontale ajustable de 0,5mm à 20mm. La fréquence d'oscillation est comprise de préférence entre 5 et 100Hz, et la vitesse de déplacement dans le sens retour est plus rapide que celle du sens aller, cette dernière correspondant à la direction de transfert ou d'extraction de la matière pulvérulente. Le rapport des vitesses à l'aller et au retour est compris entre 1/5 et 1/50. La matière pulvérulente est soumise à des accélérations inversées, ce qui a pour effet de la mettre en mouvement dans le sens aller, en fluidisant et en cassant les agglomérats.

Le mécanisme oscillant 16 peut être constitué par un motoréducteur accouplé à une came d'entraînement rotative ayant un profil spécifique, ou par tout autre actionneur oscillant à commande pneumatique ou à électroaimant.

La goulotte 12 est solidaire du mécanisme 16 et est animée du même mouvement oscillant de va et vient. L'une des extrémités de la goulotte 12 est positionnée en regard de l'orifice de sortie 14 de la trémie 13, et le flux extrait est transféré vers un point d'évacuation 17 à l'opposé de l'orifice 14. La goulotte 12 illustrée aux figures est rectiligne, et présente un profil en U, mais toutes autres formes sont possibles, notamment une section en V, rectangulaire, circulaire ou demi-circulaire.

La trémie 13 et la goulotte 12 peuvent être fabriquées indifféremment en métal, en verre, en matériau plastique ou en tout autre matériau adapté à des opérations d'usinage, de moulage ou de formage.

Le débit extrait par l'orifice de sortie 14 de la trémie 13 peut être contrôlé par une vanne 19 de réglage de manière à obtenir une section d'échappement calibrée. La vanne 19 est formée à titre d'exemple par une vanne à pelle ou à tiroir, mais tout autre organe d'obturation réglable peut être utilisé.

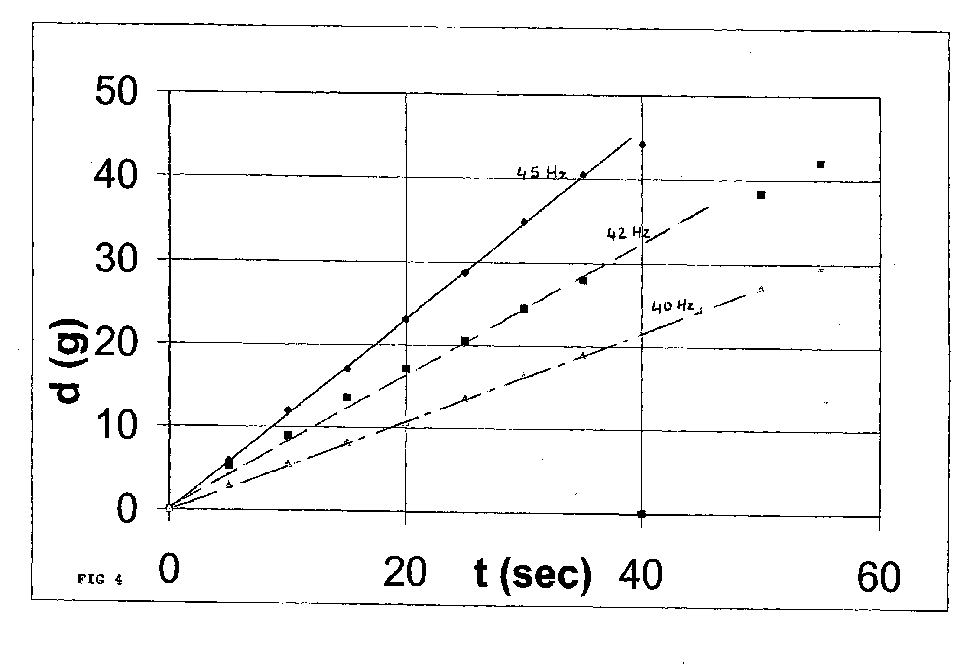

En plus du réglage de l'orifice 14, le débit massique extrait par l'orifice de sortie 14 est fonction de différents paramètres, notamment de la fréquence d'oscillation du mécanisme 16 en modifiant la vitesse du moteur d'entraînement (voir figure 4), et également de l'amplitude et des accélérations transitoires du mouvement oscillant, ainsi que de l'inclinaison de la goulotte 12 et de la trémie 13. Ces paramètres peuvent être ajustés en cours de fonctionnement, soit manuellement, soit automatiquement en cas de régulation de débit.

Pour effectuer une mesure en continu du débit massique extrait, l'entraînement de la trémie 13 est réalisé par une lame 18 souple formée par un feuillard en acier trempé ou inoxydable, et fixée à la fois au mécanisme 16 et à la trémie 13. Un capteur de masse 20 est fixé sur un intercalaire 22 posé sur le support 23 fixe, et est surmonté d'une table fixe 21 sur laquelle glisse la base de la trémie 13 avec interposition d'une pièce de glissement 25.

La lame 18 présente une rigidité élevée dans le sens du mouvement, mais est très souple dans le sens gravitationnel, ce qui permet de mesurer en fonctionnement la masse totale de la trémie 13, du tube 15 vertical de stockage, et de leurs contenus respectifs en matière pulvérulente. La variation négative de masse indiquée par le capteur de masse 20 représente le débit massique extrait de l'orffice de sortie 14 de la trémie 13.

Pour opérer la pesée de la masse extraite de la trémie 13, la goulotte 12 et la trémie 13 sont entraînées toutes les deux de manière synchrone, sans être liées mécaniquement entre elles.

Le tube 15 vertical de stockage de la matière pulvérulente est solidarisé à la table 21 fixe, de manière à éviter les erreurs de pesée dues au frottement des produits pulvérulents sur les parois du tube 15. Le tube 15 se vide progressivement par gravité dans la trémie 13 en compensant le débit massique extrait à travers l'orifice 14. La lame 18 entraîne uniquement la trémie 13 selon le mouvement oscillant, mais pas le tube 15 qui reste fixe et est pesé avec son contenu par le capteur de masse 20.

La trémie 13 et le tube 15 peuvent être alimentés manuellement ou automatiquement. Dans ce demier cas, un détecteur de niveau (non représenté) peut être intégré dans la trémie 13 ou dans le tube 15 pour commander le remplissage automatique. La goulotte 12 et /ou la trémie 13 peuvent être inclinées dans le sens du transfert pour accélérer la vitesse du flux de matière extrait.

La distance entre le fond de la trémie 13 et la base inférieure du tube 15 est ajustable au moyen de vis de réglage 26 pour adapter le débit de vidange du tube 15 aux caractéristiques d'écoulement de la matière pulvérulente.

Selon une variante (non représentée), le tube 15 de stockage est supprimé, et la trémie 13 est remplie directement par la matière pulvérulente à un niveau prédéterminé.

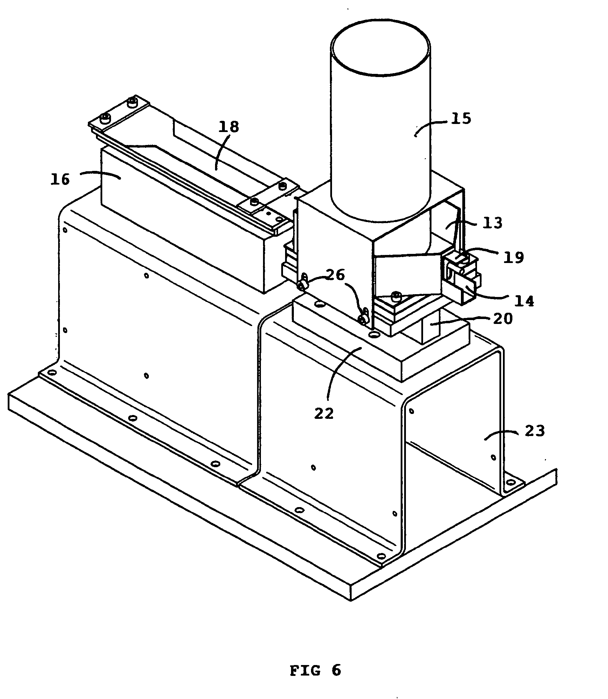

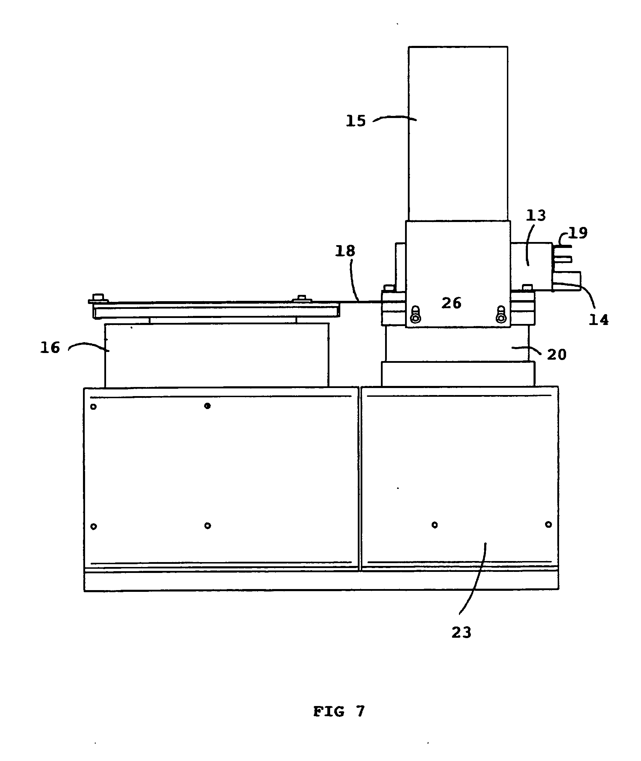

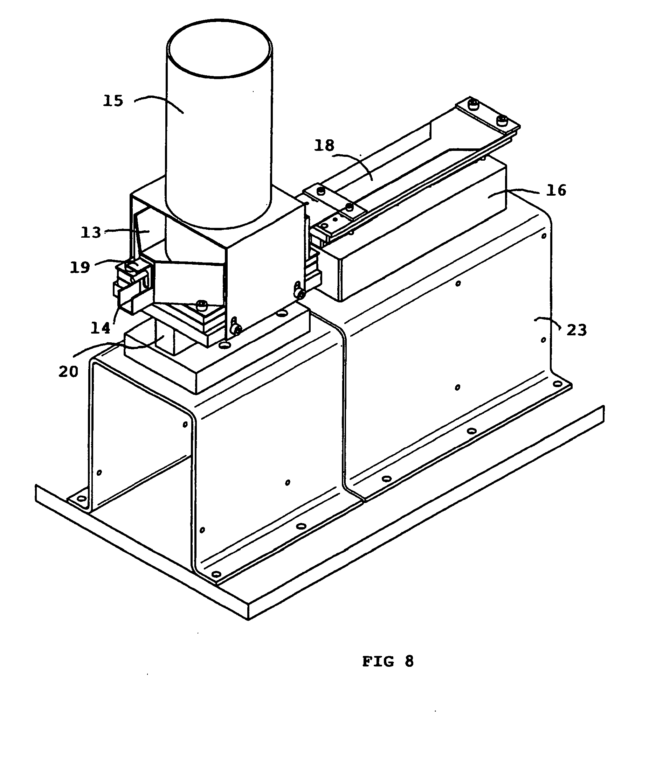

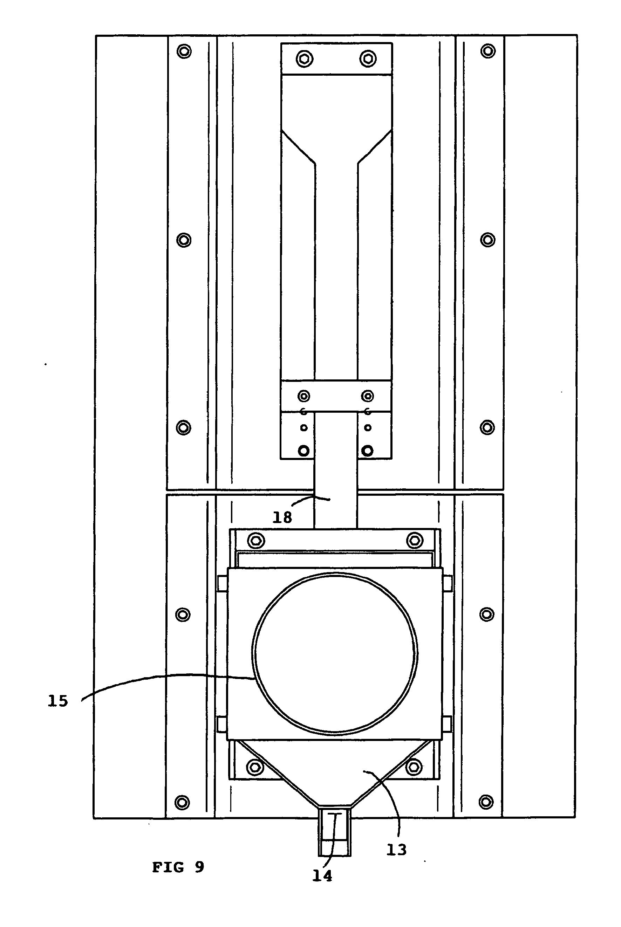

En référence aux figures 6 à 9, les mêmes numéros de repères seront utilisés pour désigner des pièces analogues à celles des figures précédentes. La goulotte 12 est supprimée, et la position du mécanisme oscillant 16 a été inversée, en étant située à l'opposé de l'orifice de sortie 14 de la trémie 13. La lame 18 souple est fixée à la fois au mécanisme 16 et directement à la trémie 13. Le reste du dispositif est identique à celui des figures 1 à 5.

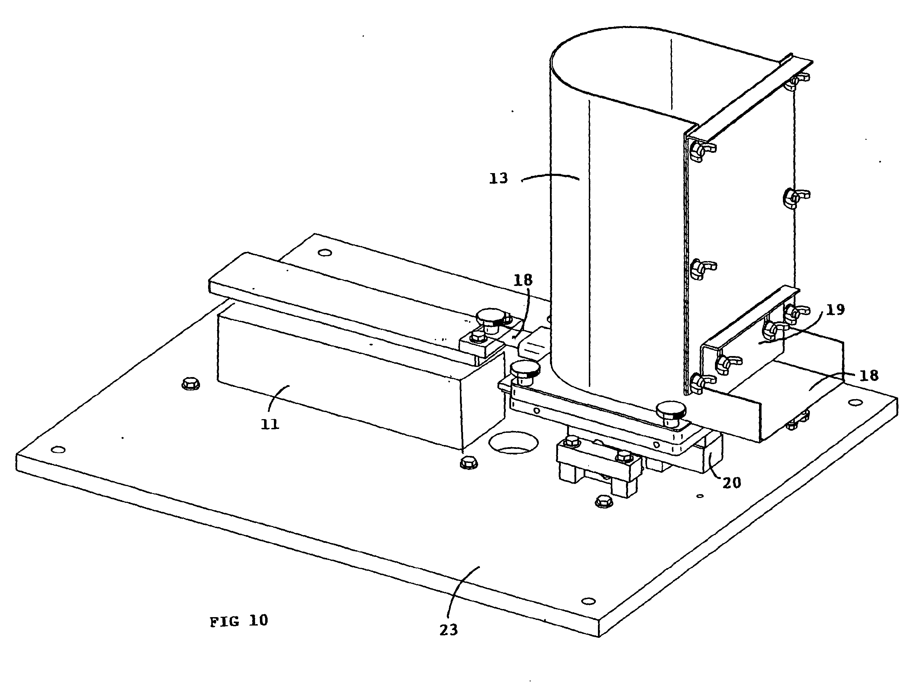

Selon la variante de la figure 10, la trémie 13 est fixe, et la lame 18 oscillante s'étend le long du fond de la trémie 13.

## Revendications

1. Dispositif de transfert et de dosage (10) d'une matière pulvérulente ou granuleuse au moyen d'un organe transporteur lié mécaniquement à des moyens d'entraînement (11), comportant:
- un mécanisme (16) oscillant animé d'un mouvement de va-et-vient rectiligne , le sens de l'aller correspondant à la direction de transfert de la matière pulvérulente,
- une trémie (13) alimentée par ladite matière, et comprenant de plus un orifice de sortie (14) de section calibrée, destiné à extraire ladite matière dans le sens de l'aller, et à doser la masse extraite, **caractérisé en ce qu**'il comporte :
- une lame (18) souple reliée au mécanisme (16), et prenant appui sur une table équipée d'une cellule de pesage destinée à mesurer en continu le débit massique extrait de l'orifice (14) de la trémie (13) et en ce que le mouvement de va-et-vient est dissymétrique et à une vitesse de retour plus rapide que la vitesse de l'aller.

2. Dispositif de transfert et de dosage selon la revendication 1, **caractérisé en ce que** la course horizontale du mouvement de va-et-vient du mécanisme (16) est réglable entre 0,5 mm et 20 mm, la fréquence d'oscillation étant comprise entre 5 Hz et 100 Hz.

3. Dispositif de transfert et de dosage selon la revendication 1, **caractérisé en ce que** l'orifice de sortie (14) de la trémie (13) est équipé d'un organe d'obturation réglable pour contrôler le débit de la masse extraite.

4. Dispositif de transfert et de dosage selon la revendication 3, **caractérisé en ce que** l'organe d'obturation comprend une vanne (19) du type à pelle ou a tiroir.

5. Dispositif de transfert et de dosage selon la revendication 1, **caractérisé en ce que** le mécanisme (16) est situé sous une goulotte (12) longitudinale de transfert raccordée à l'orifice de sortie (14), la trémie (13) et la goulotte (12) étant entraînées par le mécanisme (16) oscillant.

6. Dispositif de transfert et de dosage selon la revendication 1, **caractérisé en ce que** la trémie (13) est fixe, et que la lame (18) s'étend le long du fond de la trémie (13).

7. Dispositif de transfert et de dosage selon la revendication 1, **caractérisé en ce que** la lame (18) souple est formée par un feuillard en acier fixé par des vis au mécanisme (16) et à la trémie (13).

8. Dispositif de transfert et de dosage selon la revendication 1, **caractérisé en ce que** la cellule de pesage comprend un capteur de masse (20) fixé sur un intercalaire (22) posé sur le support (23) fixe, et surmonté d'une table (21) fixe sur laquelle glisse la base de la trémie (13) avec interposition d'une pièce de glissement (25).

9. Dispositif de transfert et de dosage selon la revendication 7, **caractérisé en ce que** la lame (18) est dotée d'une rigidité dans le sens du mouvement, et est souple dans le sens gravitationnel, de manière à autoriser la mesure de la masse totale de la trémie (13) et de son contenu en matière pulvérulente.

10. Dispositif de transfert et de dosage selon la revendication 1, **caractérisé en ce que** la trémie (13) est alimentée par un tube (15) vertical de stockage de la matière pulvérulente, ledit tube se vidant progressivement par gravité dans la trémie en compensant le débit massique extrait à travers l'orifice (14).

11. Dispositif de transfert et de dosage selon la revendication 10, **caractérisé en ce que** la distance entre le fond de la trémie et la base inférieure du tube (15) est ajustable au moyen de vis de réglage (26) pour adapter le débit de vidange du tube (15) aux caractéristiques d'écoulement de la matière pulvérulente.

## Claims

1. Transfer and dosing device (10) of a pulverulent or granular material by means of a transporting means mechanically linked to drive means (11), comprising:
- an oscillating mechanism (16) animated with a straight to-and-fro movement, the forward direction corresponding to the direction of transfer of the pulverulent material,
- a hopper (13) fed by said material and comprising in addition an outlet aperture (14) of calibrated cross-section designed to extract said material in the forward direction and to dose the extracted mass,
**characterized in that** it comprises a flexible blade (18) connected to the mechanism (16) and bearing on a table equipped with a weighing cell designed for continuous measurement of the mass flowrate extracted from the aperture (14) of the hopper (13), and that the to-and-fro movement is dissymmetric, having a faster return speed than the speed in the forward direction.

2. Transfer and dosing device according to claim 1, **characterized in that** the horizontal stroke of the to-and-fro movement of the mechanism (16) is adjustable between 0.5 mm and 20 mm, the oscillation frequency being comprised between 5 Hz and 100 Hz.

3. Transfer and dosing device according to claim 1, **characterized in that** the outlet aperture (14) of the hopper (13) is equipped with an adjustable blanking means to control the flowrate of the extracted mass.

4. Transfer and dosing device according to claim 3, **characterized in that** the blanking means comprise a slide or guillotine valve (19).

5. Transfer and dosing device according to claim 1, **characterized in that** the mechanism (16) is situated underneath a longitudinal transfer chute (12) connected to the outlet aperture (14), the hopper (13) and chute (12) being driven by the oscillating mechanism (16).

6. Transfer and dosing device according to claim 1, **characterized in that** the hopper (13) is fixed and that the blade (18) extends along the bottom of the hopper (13).

7. Transfer and dosing device according to claim 1, **characterized in that** the flexible blade (18) is formed by a steel strip fixed by screws to the mechanism (16) and to the hopper (13).

8. Transfer and dosing device according to claim 1, **characterized in that** the weighing cell comprises a weight sensor (20) fixed onto an intercalation (22) placed on the fixed support (23), and above which there is located a fixed table (21) whereon the base of the hopper (13) slides with a sliding part (25) interposed there-between.

9. Transfer and dosing device according to claim 7, **characterized in that** the blade (18) presents a rigidity in the direction of the movement, and is flexible in the gravitational direction, so as to enable measurement of the total weight of the hopper (13) and of its pulverulent material content.

10. Transfer and dosing device according to claim 1, **characterized in that** the hopper (13) is fed by a vertical storage tube (15) of the pulverulent material, said tube emptying progressively by gravity into the hopper compensating the mass flowrate extracted via the aperture (14).

11. Transfer and dosing device according to claim 10, **characterized in that** the distance between the bottom of the hopper and the bottom base of the tube (15) is adjustable by means of adjustment screws (26) to adapt the emptying rate of the tube (15) to the flow characteristics of the pulverulent material.

## Patentansprüche

1. Vorrichtung zum Transport und Dosieren (10) eines pulverförmigen oder körnigen Materials mittels einer Fördereinrichtung, der mechanisch mit Antriebsmitteln (11) verbunden ist, die umfassen:
- einen Mechanismus (16), der eine Hin- und Herbewegung ausführt, und zwar eine geradlinige Hin- und Herbewegung, wobei die Richtung des Hinwegs der Förderrichtung des pulverförmigen Materials entspricht,
- einen Trichter (13), der mit diesem Material beschickt wird und außerdem eine Austrittsöffnung (14) mit kalibriertem Querschnitt aufweist, durch die das Material in Hinbewegungsrichtung ausgetragen und die ausgetragene Masse dosiert werden soll, **dadurch gekennzeichnet, dass** er umfasst:
- einen biegsamen Rakel (18), der mit dem Mechanismus (16) verbunden ist und auf einem Tisch aufliegt, der mit einer Wiegezelle versehen ist, die dazu bestimmt ist, kontinuierlich den Massedurchsatz zu wiegen, der aus der Öffnung (14) des Trichters ausgetragen wird,sowie **dadurch**, dass die Hin- und Herbewegung asymmetrisch ist und ihre Rückwegsgeschwindigkeit höher ist als die Hinwegsgeschwindigkeit.

2. Förder- und Dosiervorrichtung nach Anspruch 1, **dadurch gekennzeichnet, dass** der horizontale Hub der Hin- und Herbewegung des Mechanismus (16) zwischen 0,5 und 20 mm einstellbar ist, wobei die Frequenz der Hin- und Herbewegung 5 bis 100 Hz beträgt.

3. Förder- und Dosiervorrichtung nach Anspruch 1, **dadurch gekennzeichnet, dass** die Austrittsöffnung (14) des Trichters (13) mit einer verstellbaren Verschlussvorrichtung zur Steuerung des ausgetragenen Massedurchsatzes versehen ist.

4. Förder- und Dosiervorrichtung nach Anspruch 3, **dadurch gekennzeichnet, dass** die Verschlussvorrichtung einen Schieber (19) nach Art eines Schaufel- oder Absperrschiebers umfasst.

5. Förder- und Dosiervorrichtung nach Anspruch 1, **dadurch gekennzeichnet, dass** der Mechanismus (16) unter einer länglichen Transportschurre (12) angeordnet ist, die mit der Austrittsöffnung (14) verbunden ist, wobei der Trichter (13) und die Schurre (12) von dem Hin- und Herbewegungsmechanismus (16) angetrieben werden.

6. Förder- und Dosiervorrichtung nach Anspruch 1, **dadurch gekennzeichnet, dass** der Trichter (13) fest installiert ist und sich der Rakel (18) entlang dem Boden des Trichters (13) erstreckt.

7. Förder- und Dosiervorrichtung nach Anspruch 1, **dadurch gekennzeichnet, dass** der biegsame Rakel (18) von einem Stahlband gebildet wird, das mit Schrauben am Mechanismus (16) und dem Trichter (13) befestigt ist.

8. Förder- und Dosiervorrichtung nach Anspruch 1, **dadurch gekennzeichnet, dass** die Wiegezelle einen Massefühler (20) umfasst, der auf einem Zwischenboden (22) angebracht ist, der auf den festen Unterbau (23) gesetzt ist und über dem sich ein fest installierter Tisch (21) erstreckt, auf den der untere Teil des Trichters (13) unter Dazwischensetzung eines Gleitelements (25) gleitet.

9. Förder- und Dosiervorrichtung nach Anspruch 7, **dadurch gekennzeichnet, dass** der Rakel (18) in Bewegungsrichtung eine Steife hat und in Richtung der Schwerkraft nachgiebig ist, sodass die Gesamtmasse des Trichters (13) und seines Inhalts an pulverförmigem Material gemessen werden kann.

10. Förder- und Dosiervorrichtung nach Anspruch 1, **dadurch gekennzeichnet, dass** der Trichter (13) über ein vertikales Lagerrohr (15) mit dem pulverförmigen Material beschickt wird, welches Rohr sich nach und nach durch Schwerkraft in den Trichter entleert und dabei den durch die Öffnung (14) ausgetragenen Massedurchsatz ausgleicht.

11. Förder- und Dosiervorrichtung nach Anspruch 10, **dadurch gekennzeichnet, dass** der Abstand zwischen dem Boden des Trichters und dem unteren Ende des Rohrs (15) mittels Justierschrauben (26) verstellbar ist, um den Entleerungsdurchsatz des Rohres (15) den Fließmerkmalen des pulverförmigen Materials anzupassen.
